# EUROPÄISCHE PATENTSCHRIFT

(11) **EP 2 816 239 B1**
(45) Veröffentlichungstag und Bekanntmachung des Hinweises auf die Patenterteilung: **22.02.2017**
(21) Anmeldenummer: 14001913.4
(22) Anmeldetag: 03.06.2014
(51) Int. Cl.: F15B 15/20, F16K 11/087, F16K 11/16, F16K 27/06

(54) **Steuervorrichtung für hydraulisch betätigbare Arbeitseinheiten**
Control device for hydraulically actuated working units
Dispositif de commande pour unités de travail à actionnement hydraulique

(30) Priorität: 20.06.2013 DE 102013010390
(43) Veröffentlichungstag der Anmeldung: 24.12.2014
(73) Patentinhaber: HYDAC Accessories GmbH, 66280 Sulzbach/Saar (DE)
(72) Erfinder: Käfer, Jürgen, 66578 Schiffweiler (DE)
(74) Vertreter: Bartels & Partner

(56) Entgegenhaltungen:
- EP-A1- 1 602 834
- DE-A1-102007 055 460
- DE-A1-102009 058 978
- DE-U1-202006 004 405
- US-B1- 6 206 028
- US-B1- 6 886 508

## Beschreibung

Die Erfindung betrifft eine Arbeitseinheit mit den Merkmalen im Oberbegriff von Anspruch 1.

In hydraulischen Arbeitskreisläufen sind bekanntermaßen Ventilanordnungen für die Steuerung betreffender Arbeitseinheiten unverzichtbare Bauelemente, die einen erheblichen Beitrag zur Gesamt-Baugröße des betreffenden Arbeitskreislaufs leisten. Auf vielen Einsatzgebieten, dies gilt insbesondere für mobile Arbeitsgerätschaften wie Bagger, Radlader, Stapler od. dgl., bei denen lediglich ein begrenzter Einbauraum zur Verfügung steht, ist eine kompakte Bauweise des aus Steuervorrichtung und zugeordneter Arbeitseinheit gebildeten Systems sehr wichtig.

Die DE 20 2006 004 405 U1 beschreibt eine pneumatische Arbeitseinheit mit einer Steuervorrichtung mit einer Ventilanordnung mit einem Gehäuse, das Fluidverbindungen bildende Anschlüsse aufweist, wobei das Gehäuse an der betreffenden Arbeitseinheit mittels einer Verschraubung anbringbar ist, die einen Anschluss des Gehäuses mit einer Fluidverbindung zwischen diesem und der Arbeitseinheit bildet, wobei die Arbeitseinheit in Form eines doppelt wirkenden Arbeitszylinders vorgesehen ist und wobei eine einen Anschluss bildende Hohlschraube mit einem Zylinderanschluss an der Stangen- oder Kolbenseite des Arbeitszylinders verschraubt ist.

Eine Steuervorrichtung geht aus der US 6 886 508 B1 hervor, die allerdings in einer Kraftstoffleitung angeordnet ist. Weitere Steuervorrichtungen werden für pneumatische Anordnungen durch die DE 10 2007 055 460 A1 und die EP 1 602 834 A1 aufgezeigt. Kugelhähne werden in der US 6 206 028 B1 und der DE 10 2009 058 978 A1 unabhängig von einer Befestigung an einem Aktuator beschrieben.

Im Hinblick auf diese Problematik stellt sich die Erfindung die Aufgabe, eine Steuervorrichtung zur Verfügung zu stellen, die eine besonders kompakte Bauweise des aus Ventilanordnung und Arbeitseinheit bestehenden Systems ermöglicht.

Erfindungsgemäß ist diese Aufgabe durch eine Steuervorrichtung gelöst, die die Merkmale des Patentanspruchs 1 in seiner Gesamtheit aufweist.

Gemäß dem Kennzeichen von Anspruch 1 ist vorgesehen, dass die Arbeitseinheit hydraulisch betätigbar ist und dass der andere Zylinderanschluss des Arbeitszylinders über eine Rohr- oder Schlauchleitung mit einem anderen Anschluss des Gehäuses verbunden ist.

Durch Schalten des Doppelkugelhahns in die Sperrstellung ist der Arbeitszylinder in der jeweiligen Kolbenstellung hydraulisch blockierbar, während der Arbeitszylinder bei der anderen Schaltstellung des Doppelkugelhahns für beliebige Kolbenbewegungen ansteuerbar ist.Eine wesentliche Besonderheit der Erfindung besteht darin, dass das Gehäuse der Ventilanordnung an der betreffenden Arbeitseinheit mittels einer Verschraubung anbringbar ist, die einen der Anschlüsse des Gehäuses mit einer Fluidverbindung zwischen diesem und der Arbeitseinheit bildet. Dadurch dient der betreffende Gehäuseanschluss in Doppelfunktion nicht nur als mechanisches Verbindungselement, das die unmittelbare Befestigung des Gehäuses der Ventilanordnung an der Arbeitseinheit, beispielsweise in Form eines Arbeitszylinders, bildet, sondern stellt gleichzeitig die Fluidverbindung zur Arbeitseinheit her. Ventilanordnung und Arbeitseinheit sind dadurch zu einem Baukörper vereinigbar, so dass eine besonders kompakte Bauweise bei geringem Platzbedarf realisierbar ist.

Erfindungsgemäß ist die einen Gehäuseanschluss bildende Verschraubung eine Hohlschraube, die im Gehäuse in einen Fluiddurchgang eingreift und mittels deren das Gehäuse an der Arbeitseinheit unter Bildung der Fluidverbindung anbringbar ist.

Bei besonders vorteilhaften Ausführungsbeispielen kann die Anordnung so getroffen sein, dass im Gehäuse ein erster Fluiddurchgang zu einem mit der Arbeitseinheit verbundenen Anschluss und ein zweiter Fluiddurchgang zu einem zweiten mit der Arbeitseinheit verbundenen Anschluss führt, wobei jedem Fluiddurchgang je ein bewegbares Steuerelement zugeordnet ist, die für gleichzeitiges Sperren oder Freigeben des zugehörigen Fluiddurchgangs gemeinsam bewegbar sind. Für die Ventilanordnung ergibt sich dadurch die Funktion eines 4/2-Wegeventils. Durch einen Umschaltvorgang zwischen zwei Schaltstellungen lassen sich zum einen beide, zur jeweiligen Arbeitseinheit führende Fluiddurchgänge gemeinsam sperren, so dass die Arbeitseinheit, beispielsweise in Form eines Arbeitszylinders, hydraulisch sperrbar ist, und zum anderen lässt sich in der zweiten Schaltstellung die Arbeitseinheit über die freigegebenen Fluiddurchgänge für gewünschte Betriebsweise ansteuern.

Bei besonders vorteilhaften Ausführungsbeispielen sind die Steuerelemente der Ventilanordnung jeweils durch eine Schaltkugel eines Doppelkugelhahns gebildet, die mittels einer gemeinsamen Spindel gleichzeitig in Sperr- oder Freigabestellung drehbar sind.

Gemäß dem Patentanspruch 5 ist Gegenstand der Erfindung auch eine Arbeitseinheit, die einen Doppelkugelhahn enthalt, wobei der Doppelkugelhahn zwei in einem Gehäuse befindliche Schaltkugeln aufweist, die mittels einer gemeinsamen Spindel in eine Freigabestellung oder Sperrstellung drehbar sind, in denen sie einen jeweils zugehörigen Fluiddurchgang gleichzeitig freigeben oder sperren, wobei das Gehäuse an einer zugeordneten hydraulisch betätigbaren Arbeitseinheit mittels einer Hohlschraube festlegbar ist, die in das Gehäuse derart eingreift, dass über sie eine Fluidverbindung zwischen einem Fluiddurchgang des Gehäuses und der Arbeitseinheit gebildet ist, und wobei die Achse der Spindel vorzugsweise senkrecht zu der durch die Hohlschraube gebildeten Fluidverbindung verläuft.

Vorzugsweise durchgreift die Hohlschraube das Gehäuse durchgehend und den betreffenden Fluiddurchgang senkrecht kreuzend.

Die gemeinsame Spindel der Schaltkugel kann für eine manuelle Drehbetätigung seitlich aus dem Gehäuse herausgeführt sein.

Um eine besonders einfache und sichere Betätigung des Doppelkugelhahns durch eine Bedienperson zu ermöglichen, kann zwischen dem aus dem Gehäuse herausgeführten Ende der Spindel und dem Gehäuse eine Anschlageinrichtung vorgesehen sein, die die Bewegung der Spindel auf eine Drehung von 90° zwischen Freigabe- und Sperrstellung begrenzt.

Nachstehend ist die Erfindung anhand eines in der Zeichnung dargestellten Ausführungsbeispiels im Einzelnen erläutert. Es zeigen:

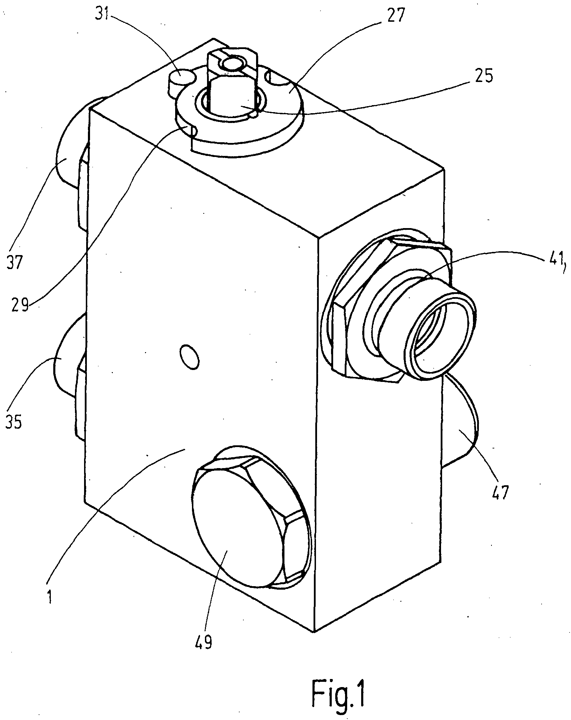

- Fig. 1: eine perspektivische Schrägansicht eines Ausführungsbeispiels der erfindungsgemäßen Steuervorrichtung in Form eines Doppelkugelhahns;
- Fig. 2: eine perspektivische Schrägansicht einer hydraulisch betätigbaren Arbeitseinheit mit einem doppelt wirkenden Arbeitszylinder, versehen mit der Steuervorrichtung gemäß dem Ausführungsbeispiel von Fig. 1;
- Fig. 3: eine Seitenansicht des in Fig. 2 Gezeigten;
- Fig. 4: einen in größerem Maßstab gezeichneten Horizontalschnitt des Ausführungsbeispiels der Steuervorrichtung; und
- Fig. 5: einen weiter vergrößert gezeichneten Vertikalschnitt entlang der Linie V-V von Fig. 4.

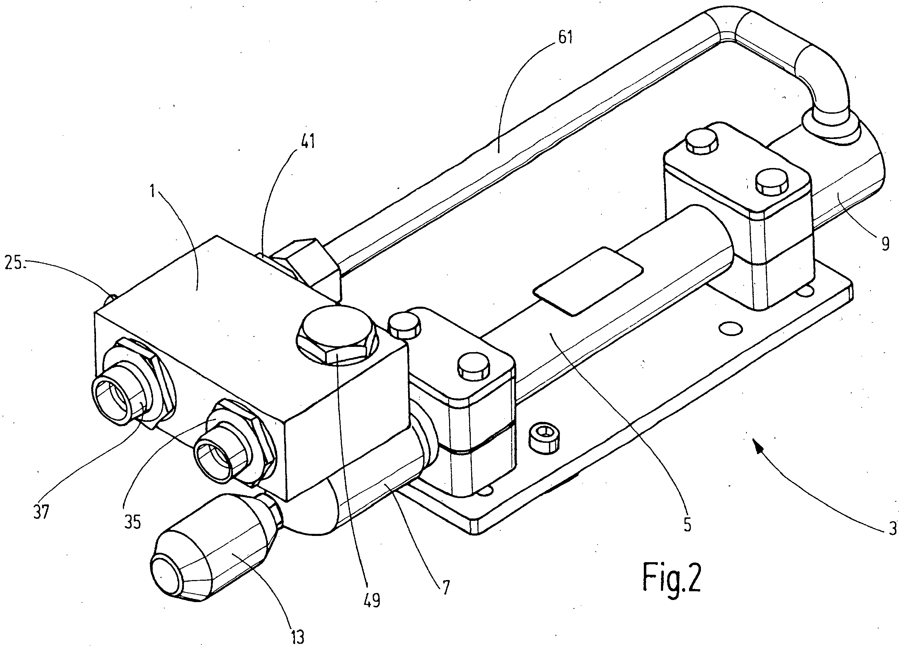

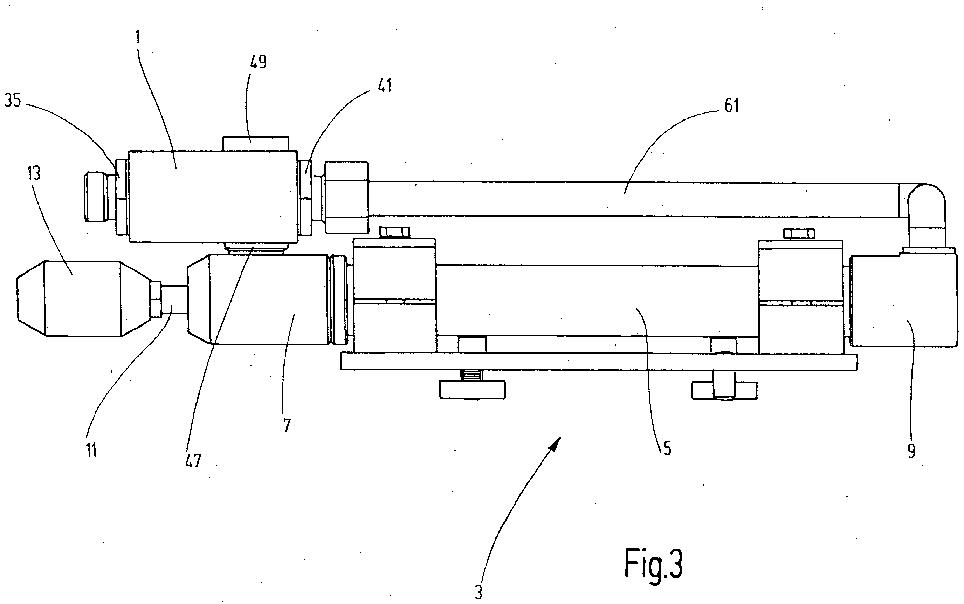

Die Erfindung ist nachstehend anhand eines Beispiels erläutert, bei dem die Ventilanordnung der Steuervorrichtung durch einen Kugelhahn gebildet ist, dessen Gehäuse mit 1 bezeichnet ist. Das Gehäuse 1 hat die Form eines rechteckförmigen Blocks, der, wie dies in Fig. 2 und 3 gezeigt ist, an einer hydraulisch betätigbaren Arbeitseinheit 3 angebracht ist. Beim gezeigten Beispiel weist die Arbeitseinheit 3 einen doppelt wirkenden Arbeitszylinder 5 auf, an dessen beiden Zylinderenden sich ein stangenseitiger Zylinderanschluss 7 und ein kolbenseitiger Zylinderanschluss 9 befinden, die von bei Arbeitszylindern üblicher Bauart sind. Das Gehäuse 1 des Doppelkugelhahns ist, wie am deutlichsten aus Fig. 3 ersichtlich ist, an dem stangenseitigen Zylinderanschluss 7 unmittelbar angebracht, und zwar mittels einer Verschraubung, die auch die Fluidverbindung zwischen Gehäuse 1 und Zylinderanschluss 7 bildet. In Fig. 3 sind die aus dem Zylinderanschluss 7 herausgeführte Kolbenstange mit 11 und deren Betätigungsende mit 13 bezeichnet.

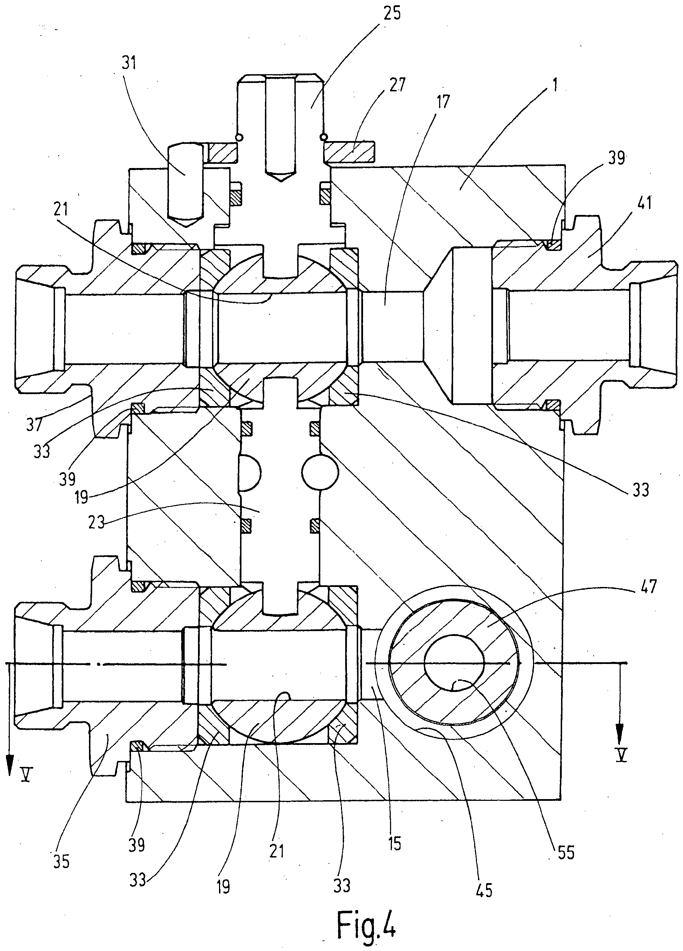

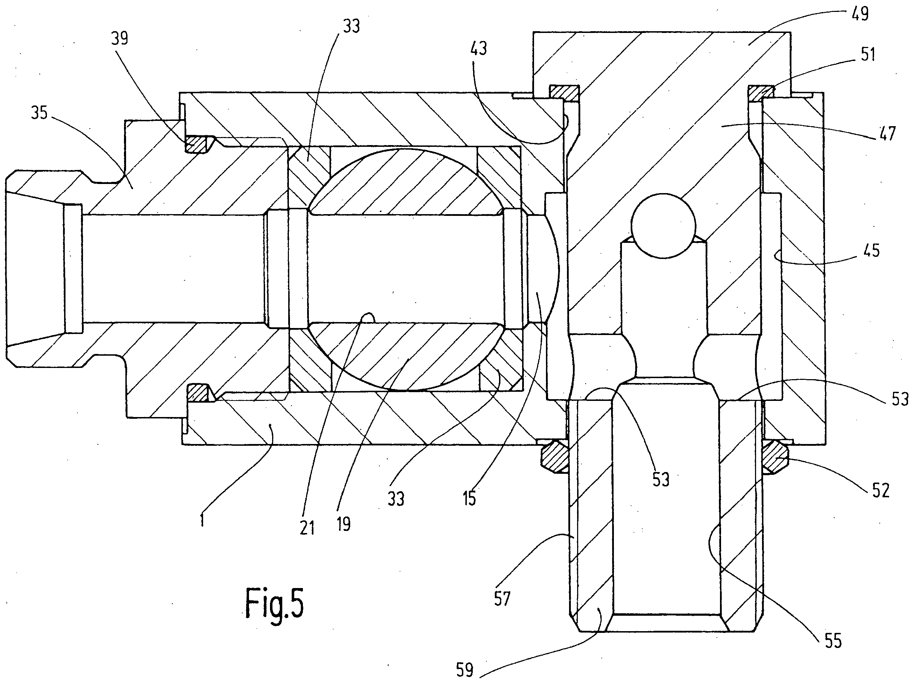

Wie Fig. 4 zeigt, sind im Gehäuse 1 des Doppelkugelhahns ein erster Fluiddurchgang 15 und ein zweiter Fluiddurchgang 17 gebildet, die im Abstand voneinander und zueinander parallel zwischen den einander gegenüberliegenden Langseiten des Gehäuses 1 verlaufen. In jedem Fluiddurchgang 15, 17 sind als zwischen Freigabestellung und Sperrstellung bewegbares Sperrelement je eine Schaltkugel 19 des Doppelkugelhahns vorgesehen, die gleich ausgebildet sind und eine einzige, gerade Durchgangsbohrung 21 aufweisen, so dass der Übergang zwischen Freigabestellung und Sperrstellung durch eine Drehung der Schaltkugeln 19 um 90° erfolgt. Die Schaltkugeln 19 sind über eine gemeinsame Spindel 23 derart verbunden, dass sie die gleiche Steuerposition einnehmen, wobei in Fig. 4 und 5 die Freigabestellung gezeigt ist. Für die Drehbetätigung ist die Spindel 23 mit einem Betätigungsende 25 aus dem Gehäuse 1 herausgeführt. Eine Begrenzerscheibe 27 mit einer Kulissenbahn 29 bildet in Zusammenwirkung mit einem Anschlagzapfen 31 eine Anschlageinrichtung, die die Bewegung der Spindel 23 auf eine Drehung von 90° zwischen Freigabe- und Sperrstellung begrenzt. Die Schaltkugeln 19 liegen in der bei Kugelhähnen üblichen Weise außenumfangsseitig an Dichtschalen 33 an.

Für eine Funktion als 4/2-Wegeventil weist der Doppelkugelhahn am Gehäuse 1 vier Gehäuseanschlüsse auf, von denen an einer der Langseiten des Gehäuses ein erster Gehäuseanschluss 35 am Ende des ersten Fluiddurchgangs 15 und ein zweiter Gehäuseanschluss 37 am Ende des zweiten Fluiddurchgangs 17 vorgesehen sind. Beide Gehäuseanschlüsse 35, 37 sind durch gleich ausgebildete Gewindeeinsätze gebildet, die in eingeschraubter Position mittels eines O-Ringes 39 abgedichtet sind. An der den Anschlüssen 35, 37 entgegengesetzten Langseite befindet sich am Ende des zweiten Fluiddurchgangs 17 ein dritter Gehäuseanschluss 41, der gleich ausgebildet ist wie die Gehäuseanschlüsse 35, 37 und ebenfalls durch einen O-Ring 39 abgedichtet ist.

Im Gegensatz zum zweiten Fluiddurchgang 17 ist der erste Fluiddurchgang 15 nicht bis zur Gehäuselangseite durchgehend, sondern endet in einer Querbohrung 43. Wie Fig. 5 an deutlichsten zeigt, bildet die Querbohrung 43 einen senkrechten Abzweig des ersten Fluiddurchgangs 15. Die im Gehäuse 1 durchgehend ausgebildete Querbohrung 43 weist im Bereich der Einmündung des Fluiddurchgangs 15 eine Erweiterung 45 auf. Diese bildet einen Hohlraum, der die Außenseite einer Hohlschraube 47 in einem Abstand umgibt, die durch die Querbohrung 43 des Gehäuses 1 hindurchgesteckt ist. Der mit einem Außensechskant versehene Kopf 49 der Hohlschraube 47 ist am Rand der Querbohrung 43 mittels eines elastomeren Dichtungsringes 51 abgedichtet. In der Hohlschraube 47 sind seitliche Bohrungen 53 gebildet, die zum inneren axialen Durchgang 55 der Hohlschraube 47 führen, der sich bis zum Ende eines mit Außengewinde 57 versehenen Schaftes 59 der Hohlschraube 47 erstreckt.

Die Hohlschraube 47 ist, wie am besten aus Fig. 3 zu ersehen ist, mit ihrem Schaft 59 unmittelbar mit dem stangenseitigen Zylinderanschluss 7 des Arbeitszylinders 5 verschraubt, wobei ein Dichtungsring 52 die Abdichtung bildet. Die Hohlschraube 47 bildet daher nicht nur das mechanische Verbindungselement zwischen Steuervorrichtung (Gehäuse 1 des Kugelhahns) und Arbeitseinheit 3, sondern gleichzeitig den vierten Gehäuseanschluss des Kugelhahns. Der dritte Gehäuseanschluss 41 des am kolbenseitigen Zylinderanschluss 9 festgelegten Gehäuses 1 ist beim gezeigten Beispiel über eine Rohrleitung 61 mit dem kolbenseitigen Zylinderanschluss 9 des Arbeitszylinders 5 in Verbindung.

Bei in der Freigabestellung der Schaltkugeln 19 befindlichem Doppelkugelhahn ist der Arbeitszylinder 5 für Verfahrbewegungen des (nicht gezeigten) Kolbens über ersten und zweiten Gehäuseanschluss 35 bzw. 37 ansteuerbar. Durch Umschalten des Doppelkugelhahns in die Sperrstellung durch Drehen der Spindel 23 mit dem Betätigungsende 25 um 90° ist der Arbeitszylinder 5 in der jeweils angesteuerten Kolbenstellung hydraulisch verriegelbar.

## Patentansprüche

1. Arbeitseinheit mit einer Steuervorrichtung mit einer Ventilanordnung mit einem Gehäuse (1), das Fluidverbindungen bildende Anschlüsse (35, 37, 41, 47) aufweist, wobei das Gehäuse (1) an der betreffenden Arbeitseinheit (3) mittels einer Verschraubung anbringbar ist, die einen Anschluss (47) des Gehäuses (1) mit einer Fluidverbindung (55) zwischen diesem und der Arbeitseinheit (3) bildet, wobei die Arbeitseinheit (3) in Form eines doppelt wirkenden Arbeitszylinders (5) vorgesehen ist und wobei eine den Anschluss bildende Hohlschraube (47) mit einem Zylinderanschluss (7) an der Stangen- oder Kolbenseite des Arbeitszylinders (5) verschraubt ist, **dadurch gekennzeichnet, dass** die Arbeitseinheit (3) hydraulisch betätigbar ist und dass der andere Zylinderanschluss (9) des Arbeitszylinders (5) über eine Rohr- oder Schlauchleitung (61) mit einem anderen Anschluss (41) des Gehäuses (1) verbunden ist.

2. Arbeitseinheit nach Anspruch 1, **dadurch gekennzeichnet, dass** im Gehäuse (1) ein erster Fluiddurchgang (15) zu einem mit der Arbeitseinheit (3) verbundenen Anschluss (47) und ein zweiter Fluiddurchgang (17) zu einem zweiten mit der Arbeitseinheit (3) verbundenen Anschluss (41) führt, wobei jedem Fluiddurchgang (15, 17) je ein bewegbares Steuerelement (19) zugeordnet ist, die für gleichzeitiges Sperren oder Freigeben des zugehörigen Fluiddurchgangs (15, 17) gemeinsam bewegbar sind.

3. Arbeitseinheit nach Anspruch 1 oder 2, **dadurch gekennzeichnet, dass** die einen Anschluss bildende Verschraubung eine Hohlschraube (47) aufweist, die im Gehäuse (1) in einen (15) der Fluiddurchgänge (15, 17) eingreift und mittels deren das Gehäuse (1) an der Arbeitseinheit (3) unter Bildung der Fluidverbindung (55) anbringbar ist.

4. Arbeitseinheit nach Anspruch 2 oder Anspruch 3 wenn abhängig von Anspruch 2, **dadurch gekennzeichnet, dass** die Steuerelemente der Ventilanordnung jeweils durch eine Schaltkugel (19) eines Doppelkugelhahns gebildet sind, die mittels einer gemeinsamen Spindel (23) gleichzeitig in Sperr- oder Freigabestellung drehbar sind.

5. Arbeitseinheit nach einem der Ansprüche 1 bis 4, **dadurch gekennzeichnet, dass** die Arbeitseinheit einen Doppelkugelhahn mit zwei in einem Gehäuse (1) befindlichen Schaltkugeln (19) aufweist, die mittels einer gemeinsamen Spindel (23) in eine Freigabestellung oder Sperrstellung drehbar sind, in denen sie einen jeweils zugehörigen Fluiddurchgang (15, 17) gleichzeitig freigeben oder sperren, wobei das Gehäuse (1) an einer zugeordneten hydraulisch betätigbaren Arbeitseinheit (3) mittels einer Hohlschraube (47) festlegbar ist, die in das Gehäuse (1) derart eingreift, dass über sie eine Fluidverbindung (55) zwischen einem Fluiddurchgang (15) des Gehäuses (1) und der Arbeitseinheit (3) gebildet ist, wobei die Achse der Spindel (23) senkrecht zu der durch die Hohlschraube (47) gebildeten Fluidverbindung (55) verläuft.

6. Doppelkugelhahn nach Anspruch 5, **dadurch gekennzeichnet, dass** die Hohlschraube (47) das Gehäuse (1) durchgehend und den betreffenden Fluiddurchgang (15) senkrecht kreuzend durchgreift.

7. Doppelkugelhahn nach Anspruch 5 oder 6, **dadurch gekennzeichnet, dass** die gemeinsame Spindel (23) für eine manuelle Drehbetätigung seitlich aus dem Gehäuse (1) herausgeführt ist.

8. Doppelkugelhahn nach einem der Ansprüche 5 bis 7, **dadurch gekennzeichnet, dass** zwischen dem aus dem Gehäuse (1) herausgeführten Ende (25) der Spindel (23) und dem Gehäuse (1) eine Anschlageinrichtung (27, 29, 31) vorgesehen ist, die die Bewegung der Spindel (23) auf eine Drehung von 90° zwischen Freigabe- und Sperrstellung begrenzt.

## Claims

1. A working unit that has a control apparatus with a valve arrangement with a housing (1) that has attachments (35, 37, 41, 47) that form fluid connections, the housing (1) being able to be affixed to the respective working unit (3) by means of screw joint that forms an attachment (47) of the housing (1) to a fluid connection (55) between the latter and the working unit (3), the working unit (3) being provided in the form of a dual action working cylinder (5), and a hollow screw (47) forming the attachment being screwed to a cylinder attachment (7) on the rod or piston side of the working cylinder (4), **characterised in that** the working unit (3) can be operated hydraulically and that the other cylinder attachment (9) of the working cylinder (5) is connected to another attachment (41) of the housing (1) by a pipe or hose line (61).

2. The working unit according to Claim 1, **characterised in that** within the housing (1) a first fluid passage (15) leads to an attachment (47) connected to the working unit (3) and a second fluid passage (17) leads to a second attachment (41) connected to the working unit (3), a moveable control element (19) being assigned to each fluid passage (15, 17), which control elements can be moved together in order to simultaneously block or clear the corresponding fluid passage (15, 17).

3. The working unit according to Claim 1 or 2, **characterised in that** the screw joint forming an attachment has a hollow screw (47) that engages in one (15) of the fluid passages (15, 17) within the housing (1) and by means of which the housing (1) can be affixed to the working unit (3) such as to form the fluid connection (55).

4. The working unit according to Claim 2 or Claim 3 if it is dependent upon Claim 2, **characterised in that** the control elements of the valve arrangement are respectively formed by a switching ball (19) of a double ball valve, which balls can be rotated simultaneously into the blocking or clearing position by means of a common spindle (23).

5. The working unit according to any of Claims 1 to 4, **characterised in that** the working unit has a double ball valve with two switching balls located within a housing (1) and that can be rotated into a clearing position or a blocking position by means of a common spindle (23), in which positions they simultaneously clear or block a respectively corresponding fluid passage (15, 17), the housing (1) being able to be fixed to an assigned hydraulically operable working unit (3) by means of a hollow screw (47) that engages in the housing (1) such that by means of said hollow screw a fluid connection (55) is formed between a fluid passage (15) of the housing (1) and the working unit (3), the axis of the spindle (23) running perpendicularly to the fluid connection (55) formed by the hollow screw (47).

6. The double ball valve according to Claim 5, **characterised in that** the hollow screw (47) passes through the housing (1) continuously and crossing the respective fluid passage (15) perpendicularly.

7. The double ball valve according to Claim 5 or 6, **characterised in that** the common spindle (23) is moved laterally out of the housing (1) for manual rotary operation.

8. The double ball valve according to any of Claims 5 to 7, **characterised in that** there is provided between the end (25) of the spindle (23) moved out of the housing (1) and the housing (1) a stop device (27, 29, 31) that limits the movement of the spindle (23) to a rotation of 90° between the clearing and the blocking position.

## Revendications

1. Unité de travail comprenant un dispositif de commande, comprenant un agencement de robinet, ayant une enveloppe (1), qui a des raccords (35, 37, 41, 47) formant des liaisons fluidiques, l'enveloppe (1) pouvant être mise sur l'unité (3) de travail concernée au moyen d'un vissage, qui forme un raccord (47) de l'enveloppe (1) avec une liaison (55) fluidique entre cette enveloppe et l'unité (3) de travail, l'unité (3) de travail étant prévue sous la forme d'un vérin (5) de travail à double effet et une vis (47) creuse formant le raccord étant vissée avec un raccord (7) de vérin au côté tige ou au côté piston du vérin (5) de travail, **caractérisée en ce que** l'unité (3) de travail peut être actionnée hydrauliquement et **en ce que** l'autre raccord (9) du vérin (5) de travail est relié par un conduit (61) tubulaire ou souple à un autre raccord (41) de l'enveloppe (1).

2. Unité de travail suivant la revendication 1, **caractérisée en ce que**, dans l'enveloppe (1), un premier passage (15) pour du fluide mène à un raccord (47) relié à l'unité (3) de travail et un deuxième passage (17) pour du fluide à un deuxième raccord (41) relié à l'unité (3) de travail, dans lequel, à chaque passage (15, 17) pour du fluide, est associé respectivement un élément (19) de commande mobile, qui sont mobiles conjointement pour l'obturation ou le dégagement simultané du passage (15, 17) pour du fluide associé.

3. Unité de travail suivant la revendication 1 ou 2, **caractérisée en ce que** le vissage formant un raccord a une vis (47) creuse qui, dans l'enveloppe (1), pénètre dans l'un (15) des passages (15, 17) pour du fluide et au moyen de laquelle l'enveloppe (1) peut être mise sur l'unité (3) de travail avec formation de la liaison (55) fluidique.

4. Unité de travail suivant la revendication 2 ou la revendication 3 lorsqu'elle dépend de la revendication 2, **caractérisée en ce que** les éléments de commande de l'agencement de robinet sont formés chacun par un boisseau (19) d'un robinet à double boisseau qui, au moyen d'une broche (23) commune, peuvent tourner simultanément pour venir dans la position d'obturation ou dans la position de dégagement.

5. Unité de travail suivant l'une des revendications 1 à 4, **caractérisée en ce que** l'unité de travail a un robinet à double boisseau ayant deux boisseaux (19) se trouvant dans une enveloppe (1), qui peuvent, au moyen d'une broche (23) commune, venir en tournant dans une position de dégagement ou dans une position d'obturation, dans lesquels ils dégagent ou obturent simultanément respectivement le passage (15, 17) pour du fluide associé, l'enveloppe (1) pouvant être fixée à une unité (3) de travail pouvant être associée et pouvant être actionnée hydrauliquement au moyen d'une vis (47) creuse, qui pénètre dans l'enveloppe (1), de manière à former par elle une liaison (55) fluidique entre un passage (15) pour du fluide de l'enveloppe (1) et l'unité (3) de travail, l'axe de la broche (23) s'étendant perpendiculairement à la liaison (55) fluidique formée par la vis (47) creuse.

6. Robinet à double boisseau suivant la revendication 5, **caractérisé en ce que** la vis (47) creuse traverse complètement l'enveloppe (1) en croisant perpendiculairement le passage (15) pour du fluide concerné.

7. Robinet à double boisseau suivant la revendication 5 ou 6, **caractérisé en ce que** la broche (23) commune est, pour un actionnement en rotation manuel, sortie latéralement de l'enveloppe (1).

8. Robinet à double boisseau suivant l'une des revendications 5 à 7, **caractérisé en ce qu'**il est prévu entre l'extrémité (25), sortie de l'enveloppe (1), de la broche (23) et l'enveloppe (1), un dispositif (27, 29, 31) de butée, qui limite le mouvement de la broche (23) à une rotation de 90° entre la position de dégagement et la position d'obturation.
